# EUROPEAN PATENT APPLICATION

(11) **EP 3 202 285 A2**
(43) Date of publication of application: **09.08.2017**
(21) Application number: 17154139.4
(22) Date of filing: 01.02.2017
(51) Int. Cl.: A47D 13/10

(54) **POWER SUPPLY FOR JUVENILE PRODUCTS**

(30) Priority: 02.02.2016 US 201662290143 P
(71) Applicant: Kids II, Inc., Atlanta, GA 30305-1712 (US)
(72) Inventor: GUNNIGLE, Ryan, Atlanta, GA 30305-1712 (US)
(74) Representative: McCartney, Jonathan William

(57) **Abstract**

A juvenile product (10) includes an electrically powered component, and a power connector coupled to the electrically powered component, and the power connector is compatible with a universal standard connector format. The universal standard connector format can be for example, compatible with a standard consumer electronic device connector format, such as a USB connector format.

## Description

### Cross-Reference to Related Application

This application claims the benefit of U.S. Provisional Patent Application Serial No. 62/290,143 filed February 2, 2016, the entirety of which is hereby incorporated herein by reference for all purposes.

### Technical Field

The present invention relates generally to the field of children's accessories such as motorized juvenile products, and more particularly to new and improved power supplies and methods of operation for such products.

### Background

Motorized juvenile apparatuses, such as swings or bouncers, can be used by parents to help calm or entertain a child. Such apparatuses, especially swings, are commonly powered by a battery pack using conventional batteries such as AA, C or D- cells. Alternatively, the products may be powered via a dedicated electrical plug, and/or power adapter such as a plug-in AC adapter having a voltage transformer and power cord with a plug configured to fit the power cord jack of that particular product.

The provision of a dedicated power supply for each product type can increase the cost of products. Also, separate dedicated power supplies for each product can make it difficult to find the correct power supply for a given product, and lead to drawers or cabinets in the user's home cluttered with multiple power supply cords of differing format. Batteries can become expensive over the lifetime of a product, and if replacement batteries are not on hand when needed, a product may be unusable until new batteries can be purchased. And due to varying types of power sockets and voltages, manufacturers may have to provide country-specific power adapters for products sold internationally, further increasing costs and complication for users.

The present invention is primarily directed to the provision of a juvenile product or apparatus configured for use with a universal or standard format power supply, which reduces or eliminates the need for batteries, avoids the cost and complications of different dedicated product power supplies for each product, and that can be used internationally.

### Summary

In example embodiments, the present invention provides a juvenile product or apparatus such as a swing, bouncer or other children's motion device or entertainment product, configured for use with a universal or standard format power supply. In example forms, the universal standard format power supply can be a Universal Serial Bus (USB) format cable and power supply.

In one form, example embodiments of the present invention take the form of a swing or other juvenile apparatus coupled to a direct power source via a USB or other universal standard format cable. In other example embodiments, the swing or other juvenile apparatus includes a rechargeable onboard or removable battery charged via a USB or other universal standard format cable. In still other example embodiments, the invention can be any other powered juvenile product or apparatus coupled to a power source via USB or other universal standard format cable or connector.

In an example aspect, the invention relates to a powered juvenile motion device including an electrically powered component for driving motion of at least a portion of the powered juvenile motion device, and a power supply for delivering electrical power to the electrically powered component to drive the powered juvenile motion device. The power supply preferably includes at least one connector having a universal standard connector format.

In another aspect, the invention relates to a juvenile product including an electrically powered component, and a power connector coupled to the electrically powered component. The power connector is preferably compatible with a universal standard connector format.

In another aspect, the invention relates to a child motion device including a base for supporting the child motion device on a support surface, a movable portion connected to the base, and configured for movement relative to the base, and an electrically powered drive component for driving movement of the movable portion relative to the base. The device preferably also includes a power connector compatible with a universal standard connector format.

These and other aspects, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of example embodiments are explanatory of example embodiments of the invention, and are not restrictive of the invention, as claimed.

### Brief Description of the Drawings

Figure 1 is a perspective view of a juvenile product in the form of a children's swing or rocker apparatus having a universal format power supply according to an example embodiment of the present invention.
Figure 2 is a perspective view showing further detail of a universal format power supply cable usable in connection with a juvenile product according to an example embodiment of the present invention.

### Detailed Description of Example Embodiments

The present invention may be understood more readily by reference to the following detailed description of example embodiments taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention. Any and all patents and other publications identified in this specification are incorporated by reference as though fully set forth herein.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

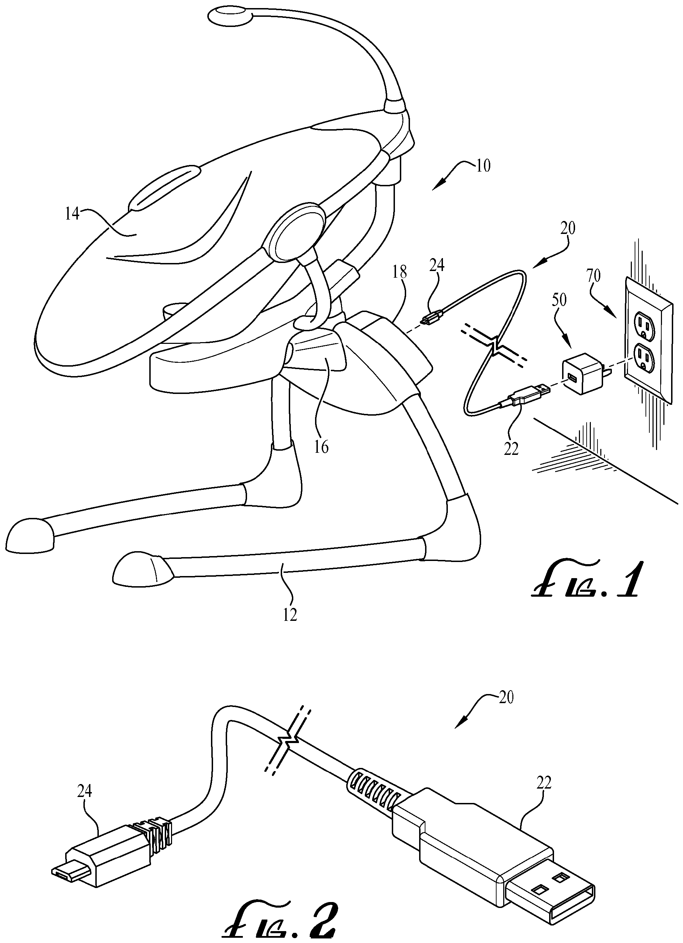

With reference now to the drawing figures, wherein like reference numbers represent corresponding parts throughout the several views, Figure 1 shows an example embodiment of a juvenile product, depicted here as a swing 10, having a power supply that is drawn upon via a Universal Serial Bus (USB) power cord 20, shown in example form in greater detail in FIG. 2. In other embodiments, the juvenile product can be a bouncer, rocker or any other children's support and/or motion device having electrical components. In yet other embodiments, the juvenile product can be a toy or other entertainment device, or any of a variety of powered products and/or devices.

In the depicted embodiment, the swing 10 generally comprises a base 12 configured to support the swing on the floor or other support surface, and a seat or other support portion 14 configured to receive a child. The support portion 14 is pivotally coupled to the base 12, to provide a rocking or swinging motion to soothe or entertain the child supported thereon. A drive mechanism 16, such as an electromagnetic drive or electric motor drives the rocking or swinging motion of the support potion 14.

A rechargeable battery pack 18 or other power storage device is optionally provided to power the drive mechanism 16. In example embodiments, the battery 18 is an onboard battery, for example mounted to the frame of the base 12, or alternatively can be a removable portable rechargeable battery. Alternatively, the drive mechanism 16 can be directly powered via a power source, for example through a power cord 20 connected to a household electrical outlet 70, without the provision of a battery pack.

The juvenile product 10 preferably further comprises a universal standard format power supply for delivering electrical power from a power source to operate the drive mechanism 16, electronic controls, lighting, electronic sound, and/or other powered components or systems of the product. In example embodiments, the power supply comprises a voltage transformer or adaptor 50 having electrical conductor prongs or contacts configured to plug into a standard household power (e.g., 120 volt, 220 volt, 240 volt) wall outlet 70 or other power source, and a conductive power cable or cord 20. The power supply, including the cord 20 and/or the voltage transformer or adaptor 50, is preferably of a universal internationally compatible format, such as for example the Universal Serial Bus (USB) standard format, typically configured to deliver about 2.5 watts of power at about 5.0 volts (DC), and about 0.5 amperes, and preferably includes at least one connector compatible with the universal standard format.

In example forms, the USB power cable 20 comprises standard universal format detachable couplings at its proximal and distal ends, allowing the power cable to be coupled to the juvenile product either permanently or removably. For example, a distal end of the power cable 20 can include a standard USB format connector 22, adapted to be received in a standard USB port or receiver of a voltage adaptor or transformer 50 configured to plug into a wall outlet, and/or to plug into a standard USB port of a computer or other electronic device. A proximal end of the power cable 20 can include a standard micro-USB format connector 24, configured to plug into the juvenile product 10, or to a battery pack 18 for powering the juvenile product. In alternate embodiments, the connectors 22 and 24 can take the form of standard USB, micro-USB, mini USB, USB-A, USB-B, USB-C, USB-OTG, Apple Lightning, and/or other universally available standard format connectors. In particular embodiments, the connectors are compatible with standard consumer mobile phone (i.e., cell phone or smart phone), laptop, tablet or other computer equipment, or other commonly used personal electronic device(s).

In example embodiments, the power supply serves to directly power the juvenile product. In other embodiments, the power source charges a battery pack that powers the juvenile product. For example, the power supply may provide a trickle charge to maintain charge of the battery pack, while the battery pack powers the juvenile product. Additionally, the power cord 20 can be used in conjunction with a peripheral electronic device such as a mobile phone, tablet computer or other control device incorporating a processor and user interface, to control and / or communicate with the juvenile product, to deliver content such as music or voice to the product, and/or for other purposes.

The incorporation of a universal standard format power supply for the juvenile product allows users to power the product using equipment most consumers will already have in their homes, such as cell phone chargers using USB or other standard format connectors. Thus, a user will not need to sort through a tangle of numerous power cord adaptors to find the correct one for use with a particular product. Additionally, manufacturing costs may be lowered through the provision of a standard format power supply, due to economies of scale as compared to different dedicated power supplies for different products. And because most consumers will already have standard format power supplies for other commonly used products, product costs may be further reduced by optionally omitting the need to provide a power supply with every product.

In use, a parent or adult caregiver will set up the swing or other juvenile product 10 in standard fashion. The power supply will be connected, for example by plugging one end of the cord 20 into the product 10, and the other end into a power source such as adaptor 50 plugged into a wall outlet 70, or into a USB port of a battery pack or an electronic device. A child can then be placed in the seat 14, and the product 10 operated in typical fashion. Optionally, the cord 20 can be connected between the product 10 and a computer, smart-phone or other electronic device to configure or control the product, for example using a downloadable mobile app or other application software.

While the invention has been described with reference to example embodiments, it will be understood by those skilled in the art that a variety of modifications, additions and deletions are within the scope of the invention, as defined by the following claims.

For the avoidance of doubt, the present application extends to the subject-matter described in the following numbered paragraphs (referred to as "Para" or "Paras"):
1. A powered juvenile motion device comprising:
   an electrically powered component for driving motion of at least a portion of the powered juvenile motion device; and
   a power supply for delivering electrical power to the electrically powered component to drive the powered juvenile motion device, the power supply comprising at least one connector having a universal standard connector format.
2. The powered juvenile motion device of Para 1, wherein the power supply comprises a power cord having first and second ends, each end comprising a connector having a universal standard connector format.
3. The powered juvenile motion device of Para 1 or 2, wherein the power supply further comprises a power adaptor comprising a voltage transformer.
4. The powered juvenile motion device of any preceding Para, wherein the universal standard connector format is compatible with a standard consumer electronic device connector format, the consumer electronic device selected from a mobile phone, a tablet computer and a laptop computer device.
5. The powered juvenile motion device of any preceding Para, wherein the universal standard connector format is a USB standard connector format.
6. The powered juvenile motion device of any preceding Para, wherein the device is selected from a swing, a rocker and a glider, and wherein the electrically powered component drives a swinging, rocking or gliding motion of a child support portion of the device.
7. The powered juvenile motion device of any preceding Para, further comprising a battery for storing electrical power to drive the electrically powered component, wherein the power supply is configured for connection to charge the battery.
8. A juvenile product comprising an electrically powered component, and a power connector coupled to the electrically powered component, the power connector being compatible with a universal standard connector format.
9. The juvenile product of Para 8, wherein the electrically powered component comprises a drive mechanism for driving motion of a moving portion of the juvenile product.
10. The juvenile product of Para 9, wherein the moving portion of the juvenile product comprises a child support portion of a juvenile product selected from a swing, a rocker and a glider.
11. The juvenile product of any of Paras 8-10, further comprising a battery for storing power to operate the electrically powered component, the battery configured for connection to receive a charge through the power connector.
12. The juvenile product of any of Paras 8-11, wherein the power connector is compatible with a power supply comprising a power adaptor and a power cord having a coupling compatible with the power connector of the juvenile product.
13. The juvenile product of any of Paras 8-12, wherein the power connector is compatible with a standard consumer electronic device connector format.
14. The juvenile product of any of Paras 8-13, wherein the universal standard connector format is a USB standard connector format.
15. A child motion device comprising:
   a base for supporting the child motion device on a support surface;
   a movable portion connected to the base, and configured for movement relative to the base;
   an electrically powered drive component for driving movement of the movable portion relative to the base; and
   a power connector compatible with a universal standard connector format.
16. The child motion device of Para 15, wherein the movable portion is a child support portion of a child motion device selected from a swing, a rocker and a glider.
17. The child motion device of Para 15 or 16, further comprising a battery for storing power to operate the electrically powered drive component, the battery configured for connection to receive a charge through the power connector.
18. The child motion device of any of Paras 15-17, wherein the power connector is compatible with a power supply comprising a power adaptor and a power cord having a coupling compatible with the power connector.
19. The child motion device of any of Paras 15-18, wherein the power connector is compatible with a standard consumer electronic device connector format.
20. The child motion device of any of Paras 15-19, wherein the universal standard connector format is a USB standard connector format.

## Claims

1. A powered juvenile motion device comprising:
an electrically powered component for driving motion of at least a portion of the powered juvenile motion device; and
a power supply for delivering electrical power to the electrically powered component to drive the powered juvenile motion device, the power supply comprising at least one connector having a universal standard connector format.

2. The powered juvenile motion device of claim 1, wherein the power supply comprises a power cord having first and second ends, each end comprising a connector having a universal standard connector format.

3. The powered juvenile motion device of claim 1 or 2, wherein the power supply further comprises a power adaptor comprising a voltage transformer.

4. The powered juvenile motion device of any preceding claim, wherein the universal standard connector format is compatible with a standard consumer electronic device connector format, the consumer electronic device selected from a mobile phone, a tablet computer and a laptop computer device.

5. The powered juvenile motion device of any preceding claim, wherein the universal standard connector format is a USB standard connector format.

6. The powered juvenile motion device of any preceding claim, wherein the device is selected from a swing, a rocker and a glider, and wherein the electrically powered component drives a swinging, rocking or gliding motion of a child support portion of the device.

7. The powered juvenile motion device of any preceding claim, further comprising a battery for storing electrical power to drive the electrically powered component, wherein the power supply is configured for connection to charge the battery.

8. A juvenile product comprising an electrically powered component, and a power connector coupled to the electrically powered component, the power connector being compatible with a universal standard connector format.

9. The juvenile product of claim 8, wherein the electrically powered component comprises a drive mechanism for driving motion of a moving portion of the juvenile product.

10. The juvenile product of claim 9, wherein the moving portion of the juvenile product comprises a child support portion of a juvenile product selected from a swing, a rocker and a glider.

11. The juvenile product of any of claims 8-10, further comprising a battery for storing power to operate the electrically powered component, the battery configured for connection to receive a charge through the power connector.

12. The juvenile product of any of claims 8-11, wherein the power connector is compatible with:
a power supply comprising a power adaptor and a power cord having a coupling compatible with the power connector of the juvenile product; and /or
a standard consumer electronic device connector format.

13. The juvenile product of any of claims 8-12, wherein the universal standard connector format is a USB standard connector format.

14. A child motion device comprising:
a base for supporting the child motion device on a support surface;
a movable portion connected to the base, and configured for movement relative to the base;
an electrically powered drive component for driving movement of the movable portion relative to the base; and
a power connector compatible with a universal standard connector format.

15. The child motion device of claim 14:
wherein the movable portion is a child support portion of a child motion device selected from a swing, a rocker and a glider; and/or
further comprising a battery for storing power to operate the electrically powered drive component, the battery configured for connection to receive a charge through the power connector; and/or
wherein the power connector is compatible with a power supply comprising a power adaptor and a power cord having a coupling compatible with the power connector; and/or
wherein the power connector is compatible with a standard consumer electronic device connector format; and/or. wherein the universal standard connector format is a USB standard connector format.
